# EUROPÄISCHE PATENTSCHRIFT

(11) **EP 3 672 888 B1**
(45) Veröffentlichungstag und Bekanntmachung des Hinweises auf die Patenterteilung: **08.03.2023**
(21) Anmeldenummer: 18765572.5
(22) Anmeldetag: 23.08.2018
(51) Int. Cl.: B65D 25/06

(54) **TRENNELEMENT ZUR UNTERTEILUNG DES INNENRAUMES EINES DRAHT-KORBES**
DIVIDING ELEMENT FOR SUBDIVIDING THE INTERIOR OF A WIRE BASKET
ÉLÉMENT DE SÉPARATION POUR LA DIVISION D'UN ESPACE INTÉRIEUR D'UN PANIER EN FIL MÉTALLIQUE

(30) Priorität: 24.08.2017 DE 102017119384
(43) Veröffentlichungstag der Anmeldung: 01.07.2020
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2018/072793
(87) Internationale Veröffentlichungsnummer: WO 2019/038391

(56) Entgegenhaltungen:
- DE-A1- 4 014 734
- DE-U1- 8 810 830
- DE-U1-202007 013 033
- US-B1- 6 430 782
- US-B1- 6 691 382

## Beschreibung

Die Erfindung betrifft ein Trennelement, mit dem der Innenraum eines Korbes, insbesondere eines Einkaufwagenkorbes, unterteilbar ist, aufweisend eine Mehrzahl von Verbindungselementen zur Befestigung des Trennelements an den Seiten des Korbes.

Derartige Trennelemente werden beispielsweise in Form von Trenngittern in Einkaufswagen eingesetzt. Mit ihnen kann ein dem Griff des Einkaufswagens abgewandter Endbereich eines Einkaufswagenkorbes abgetrennt werden, um darin transportierte Waren vom Rest des Einkaufs separieren zu können. Das Trenngitter dient dabei dem Schutz von empfindlicher Waren gegen ein Verrutschen oder Umkippen bzw. das Zusammenstoßen mit anderen in den Einkaufswagenkorb gelegten Gegenständen.

Das Trenngitter wird üblicherweise quer im Einkaufswagenkorb eingesetzt und, im Falle eines Korbs aus Draht, endseitig an Drähten der Längsseiten des Einkaufswagenkorbes befestigt. Als Befestigungsmittel weist das Trenngitter seitlich vorstehende Ösen auf. Zur Befestigung an den Drähten werden die Ösen vollständig um den Draht geschlossen, beispielsweise durch Verschweißen. Auf diese Weise wird sichergestellt, dass das Trenngitter nicht mehr in Längsrichtung des Korbes verschoben werden kann. Bei der Positionierung eines solchen Trenngitters ist zusätzlich zu beachten, dass die Tiefe des verbleibenden Einkaufswagenkorbes ausreicht, um das vollständige Einschieben weiterer Einkaufswagen beim Stapeln der Einkaufswagen in einer Garage oder Abstellfläche zu ermöglichen.

Des Weiteren finden auch Kunststoff-Trenngittern Verwendung. Diese werden in Einkaufswagenkörbe aus Kunststoff eingesetzt, indem sie in am Rahmen des Kunststoffkorbes dafür vorgehaltene Öffnungen eingesteckt werden.

Nachteilig an diesen Lösungen ist es, dass die aus dem Stand der Technik bekannten Trenngittern auf die Maße bestimmter Einkaufswagenkörbe vorgefertigt sein müssen, damit sie dort eingesetzt werden können. Eine flexible Anpassung der Trenngittern ist nicht vorgesehen und konstruktionsbedingt auch nicht möglich.

Aus dem DE 20 2007 013033 U1, dem DE 40 14 734 A1 und dem DE 88 10 830 U1 sind Trennelemente für einen Warenkorb bekannt, die mittels zumindest im wesentlichen u-förmiger Verbindungselemente am Warebkorb befestigt werden.

Die vorliegende Anmeldung stellt sich die Aufgabe, ein gattungsgemäßes Trennelement vorzuschlagen, welches einfach und ohne großen Aufwand in vorhandene Körbe eingesetzt, eingepasst und befestigt werden kann.

Diese Aufgabe wird gelöst mit einem Trennelement gemäß Anspruch 1. Einige besonders vorteilhafte Ausgestaltungen des erfindungsgemäßen Trennelements werden in den Unteransprüchen genannt. Der wesentliche Grundgedanke der Erfindung ist, dass ein erster Abschnitt eines ersten Verbindungselements zur Befestigung des Trennelements an einer Seite des Korbes zumindest im wesentlichen u-förmig ausgebildet ist, wobei ein Schenkel des zumindest im wesentlichen u-förmigen ersten Abschnitts an einen zweiten Abschnitt des ersten Verbindungselements angrenzt, der in einer im Trennelement ausgebildeten ersten Führung kraftschlüssig und/oder formschlüssig gehalten wird. Der u-förmige Abschnitt wird dazu genutzt, einen der längsseitigen Stäbe des Korbes zu umfassen. Ein Stab im Sinne dieser Anmeldung ist bei einem Draht-Korb ein Draht, bzw. bei einem Kunststoff-Korb eine seiner Streben.

Im Weiteren werden vorteilhafte Ausgestaltungen des erfindungsgemäßen Trennelements in der Ausführungsform für einen Draht-Korb beschrieben. Die dem entsprechende Ausführungsform für einen Kunststoff-Korb ist jeweils analog zu sehen und wird nicht separat dargestellt. Grundsätzlich ist das erfindungsgemäße Trennelement nicht nur quer im Korb, sondern auch in Längsrichtung montierbar. Soweit hier die Befestigung des Trennelement an der Längsseite des Korbes erläutert wird, gilt dies genauso für die Befestigung an einer Querseite.

Ein besonderer Vorteil einer Ausführungsform des erfindungsgemäßen Trennelements ist, dass ein zum Umfassen des Drahts erforderliche Einschieben des ersten Verbindungselement in das Trennelement es lediglich erfordert, den Kraftschluss zu überwinden, mit dem der zweite Abschnitt des Verbindungselements in der ersten Führung des Trennelements gehalten wird. Das quer in den Korb eingesetzte Trennelement lässt sich somit auf besonders einfache Weise an der Längsseite des Korbes befestigen. Gleiches gilt für die Befestigung des Trennelements mittels eines weiteren Verbindungselements auf der gegenüberliegenden Längsseite des Korbes.

Die kraftschlüssige Verbindung zwischen Trennelement und erstem Verbindungselement wird vorzugsweise erreicht, in dem eine im Trennelement angeordnete erste Führung etwas enger ausgebildet ist als der in sie eingesetzte zweite Abschnitt des Verbindungelement. Auf diese Weise muss der zweite Abschnitt unter Kraftaufwand in die Führung eingesetzt werden. Diese besonders einfache Verbindung kann durch einen leichte Hinterschneidung zwischen dem Verbindungselement und der ersten Führung weiter verstärkt werden. Dies kann mittels Wellen oder Rasten erreicht werden, die an der ersten Führung und/oder am ersten Verbindungelement vorstehen und die jeweils andere Seite leicht hinterschneiden. Die leichte Hinterschneidung ist darauf ausgelegt, dass die Elastizität oder Verformbarkeit der verwendeten Materialien ein Überwinden der Hinterschneidung ohne Beschädigung ermöglicht.

Alternativ oder ergänzend hierzu ist eine formschlüssige Verbindung vorgesehen, bei der der Formschluss zwischen dem Trennelement und dem ersten Verbindungselement, vorzugsweise dessen zweitem Abschnitt, hergestellt wird. Dieser Formschluss muss manuell entfernt oder aufgehoben werden, um ein Herausziehen des ersten Verbindungselements aus dem Trennelement ohne Beschädigung zu ermöglichen. Dies wird vorzugsweise durch ein Befestigungselement erreicht, welches einen Formschluss zwischen dem Trennelement und dem ersten Verbindungselement, insbesondere dem zweiten Abschnitt des ersten Verbindungselements, herstellt. Das Befestigungselement kann auf besonders einfache Weise als Schraube ausgebildet sein, welche in das Trennelement eingeschraubt wird, nachdem der zweite Abschnitt in die erste Führung eingesetzt worden ist. Die Schraube ist hierbei das Mittel zum Herstellen des Formschlusses.

Andere besonders bevorzugte Befestigungselemente sind ein Stift, ein Bolzen oder ein Splint. Für den Fall, dass der zweite Abschnitt und/oder die erste Führung eine Rastung aufweist, erlaubt das Einsetzen eines derartigen Befestigungselements hinter eine der Rasten eine Blockade des ersten Verbindungselements gegen ein Herausziehen aus dem Trennelement.

In einer bevorzugten Ausführungsform weist der zweite Abschnitt des ersten Verbindungselements eine in Längsrichtung des zweiten Abschnitts verlaufende Nut auf. Eine solche Nut kann das Befestigungselement beim Einsetzen in das erste Verbindungselement sicher führen, wodurch eine Fehlmontage verhindert wird.

In einer vorteilhaften Ausführungsform greifen beide Schenkel des zumindest im wesentlichen u-förmigen ersten Abschnitts in das Trennelement ein. Indem beide Schenkel im Trennelement gehalten werden, ragt im Wesentlichen nur noch der Kreisbogen des ersten Abschnitts am Trennelement heraus. Auf diese Weise kann das Trennelement nahe an die Längsseiten des Korbes heranreichen, sodass die Spaltbreite zwischen Korb und Trennelement gering gehalten werden kann. Zudem wird ein Auseinanderbiegen der Schenkel des ersten Abschnitts erschwert, da hierzu ein Stück eines Schenkels aus dem Trennelement herausgezogen werden müsste.

Zumindest im wesentlichen u-förmig im Sinne dieser Anmeldung bedeutet eine Form, mit der ein Draht an der Längsseite des Einkaufswagenkorbes umfasst werden kann. Dies kann sich je nach Drahtform unterscheiden. Ist der Draht rund, bietet es sich an, den Bereich zwischen den Schenkel des u-förmigen Abschnitts kreisbogenförmig auszulegen. Von Vorteil ist es dabei, wenn das erste Verbindungselement nicht weit über den Draht hinaus an der Außenseite des Korbes vorsteht. Dies kann erreicht werden, wenn die Form des den Draht umfassenden Verlaufs des ersten Abschnitts so gewählt wird, dass sie eng an dem Draht anliegen kann. Hierdurch wird die Wahrscheinlichkeit reduziert, dass Gegenstände an dem außen am Korb vorstehenden Verlauf des ersten Abschnitts hängen bleiben können oder der vorstehende erste Abschnitt durch von außen auf den Korb einwirkende Stöße beschädigt oder verbogen werden kann.

Vorteilhaft ist es, wenn der zwischen den beiden Schenkel liegende Verlauf des zumindest im wesentlichen u-förmigen ersten Abschnitts einen Bereich umfasst, welcher eine reduzierte Materialstärke aufweist. Der Bereich mit reduzierter Materialstärke erlaubt eine gewisse Flexibilität des ersten Abschnitts. Es ist somit nicht erforderlich, den ersten Abschnitt auf einen bestimmten Drahtdurchmesser auslegen zu müssen. Die bei Einkaufswagenkörben verwendeten Drahtdurchmesser liegen normalerweise im Bereich zwischen 3mm und 4mm, oft zwischen 3,25mm und 3,6mm. Es ist somit von Vorteil, den Bereich mit reduzierter Materialstärke so zu dimensionieren, dass er eine Dehnung von 1mm ermöglicht. Zur Abdeckung der meist verwendeten Drahtdurchmesser reicht es sogar aus, nur eine Dehnung von 0,4mm vorzusehen.

Von besonderem Vorteil ist es dabei, wenn der erste Abschnitt eine Hinterschneidung für den Draht ausbildet, sodass der Umfang des Drahtes zu mehr als 180° umfasst wird. Das hierdurch ermöglichte Einschnappen des ersten Abschnitts am Draht erschwert ein Entfernen des ersten Abschnittes vom Draht zusätzlich. Gleichzeitig bietet das Einschnappen oder Einrasten dem Monteur des Trennelements ein Signal dafür, dass er den ersten Abschnitt richtig am Draht eingesetzt hat.

Von Vorteil ist es auch, wenn einer der Schenkel des zumindest im wesentlichen u-förmigen ersten Abschnitts des ersten Verbindungselements eine Nase aufweist, welche in eine in Längsrichtung der ersten Führung verlaufende Aussparung eingreift. Dies verhindert ein seitenverkehrtes Einsetzen des ersten Verbindungselements in das Trennelement.

In einer besonders bevorzugten Ausführungsform ist ein zweites Verbindungselement an der Unterseite des Trennelements angeordnet, wobei das zweite Verbindungselement an der Unterseite vorsteht und eine Aufnahme für einen Draht an der Unterseite des Korbes ausbildet, insbesondere eine Hinterschneidung für den Draht ausformt. Auf diese Weise lässt sich auch die Unterseite des Trennelements am Korb befestigen, wodurch die Stabilität des Trennelements im Korb weiter verbessert wird. Vorzugsweise formt die Aufnahme eine Hinterschneidung aus, sodass das zweite Verbindungselement an einem Draht des Korbes eingeschnappt werden kann.

Von Vorteil ist es dabei, wenn das zweite Verbindungselement lösbar mit dem Trennelement verbunden ist. Dies erlaubt es, das Trennelement von der Unterseite des Korbes zu entfernen, bevor die Befestigung des zweiten Verbindungselements vom Draht gelöst werden muss. Danach ist das zweite Verbindungselement leicht zu erreichen und dementsprechend auch einfacher vom Draht zu entfernen.

In einer hierzu vorteilhaften Ausführungsform ist das lösbar mit dem Trennelement verbundene zweite Verbindungselement ein günstig herzustellender Artikel zum einmaligen Gebrauch. Eine beim Lösen erfolgte Beschädigung eines derartigen zweiten Verbindungselements ist dann unschädlich für die weitere Verwendung des Trennelement. Das zweite Verbindungselement kann einfach ausgetauscht werden. In einer bevorzugten Ausführungsform ist an der Unterseite des Trennelements zumindest ein Zentriermittel angeordnet, welches das Trennelement beim Einsetzen in den Korb auf einem Draht des Korbes positioniert. Das Zentriermittel erleichtert das passgenaue Aufsetzen des Trennelements auf einen Draht, insbesondere an der Unterseite des Korbes und damit auch dessen Befestigung mittels des zweiten Verbindungselements. Diese Ausführungsform ist besonders vorteilhaft, wenn das zweite Verbindungselement drehbar am Trennelement gehalten ist. Dies erlaubt es, dass beim Aufsetzen des Trennelements auf den Draht des Korbes das zweite Trennelement den Vorgang nicht behindert. Nach dem Aufsetzen wird dann durch eine Drehung des zweiten Verbindungselements die Hinterschneidung hergestellt, insbesondere das zweite Verbindungselement am Draht eingeschnappt.

Das Trennelement weist an seiner Oberseite eine schlitzförmige Öffnung zum Einsetzen eines Informationsträgers auf, wobei die schlitzförmige Öffnung eine zweite Führung für einen in die Aussparung einsetzbares flächiges Einschubelement umfasst, wobei der Informationsträger zwischen der zweiten Führung und dem Einschubelement formschlüssig gehalten werden kann. Ein derartiges Trennelement ist dazu geeignet, zusätzlich zu seiner Funktion der Warentrennung als Informationsträger zu dienen, mit dem ein Kunde beispielsweise Werbung zu bestimmten Produkten dargeboten werden kann.

Von besonderem Vorteil ist es dabei, wenn das Trennelement entlang der schlitzförmigen Öffnung und der zweiten Führung einen Rahmen ausbildet, der eine materialfreie Zone des Trennelements begrenzt. Auf diese Weise wird eine freie Sicht auf den Informationsträger ermöglicht. Ein solcher Rahmen kann auch an Vor- und Rückseite des Trennelements ausgebildet sein, insbesondere also das Trennelement vollständig durchbrechen. Der beidseitige Rahmen erlaubt es, Informationen an beiden Seiten des Trennelement darzubieten. Von besonderem Vorteil ist es dabei, dass in diesem Fall nicht jeweils ein eigenen Informationsträger pro Seite in die Aussparung eingesetzt werden muss. Es reicht aus, einen entsprechend großen Informationsträger vor dem Einsetzen mittig am Einschubelement anzulegen, zu falzen und dann mit dem Einschubelement in die schlitzförmige Öffnung einzustecken bzw. durch das Einsetzen des Einschubelement in die zweite Führung ein Falzen des Informationsträgers in seiner Mitte herbeizuführen.

In einer bevorzugten Ausführungsform wird das Einschubelement formschlüssig in der schlitzförmigen Öffnung gehalten. Dies verhindert ein einfaches Herausziehen des Einschubelements aus der schlitzförmigen Öffnung durch eine nicht dafür autorisierte Person auf besonders einfache Weise. Dabei ist das den Formschluss herstellende Element elastisch, so dass es bei entsprechenden Kraftaufwand aus der Hinterschneidung zurückweicht und den Formschluss auflöst. Um den Widerstand des Formschlusses zu beim Herausziehen überwinden, ist ein Werkzeug erforderlich. Dieses Werkzeug ist vorzugsweise eine Zange, welche einen flächigen Greifer am Zangenkopf aufweist. Der Greifer wird beidseitig am Einschubelement bzw. an dem daran gehaltenen Informationsträger angesetzt und dieser dann kräftig nach oben gezogen, bis der Kraftaufwand ausreicht, um den Formschluss aufzulösen.

Bei dieser Ausführungsform ist es besonders vorteilhaft, wenn die Oberseite des Trennelements eine Aufnahme für ein Endstück des Einschubelements aufweist, wobei das Endstück und die Aufnahme in Längsrichtung, insbesondere in Längs- und Querrichtung, über die schlitzförmige Öffnung hinaus stehen. Derart ausgeformt, überdeckt das Endstück des flächigen Einschubelements auch die zweite Führung. Darüber hinaus können in diese Aufnahme noch die kraftschlüssige Verbindung zwischen dem ersten Verbindungselement und der ersten Führung verstärkende Halteelemente, beispielsweise Klemmen oder Schrauben eingesetzt werden, die anschließend mit dem Endstück überdeckt werden und damit nicht mehr sichtbar sind.

Ein besonderer Vorteil des erfindungsgemäßen Trennelement ist sein Aufbau aus nur wenigen Bauteilen. Dies erleichtert den Zusammenbau und Einbau des Trennelements. Zudem ist es möglich, einzelne aber auch alle Bauteile des Trennelements aus Kunststoff zu fertigen. So können sie beispielsweise trotz komplexer Ausformung in einem Arbeitsgang per Spritzgussverfahren hergestellt werden. Hierfür besonders geeignet ist PP oder HDPE, die dem aus ihnen gefertigten Trenngitter-Bauteilen ausreichend Stabilität geben und im Spritzgussprozess nur eine geringe Schwindung aufweisen.

Eine bevorzugte Ausführungsform des erfindungsgemäßen Trennelement wird mit den folgenden Figuren näher erläutert. Dabei zeigen:
Figur 1: eine Ansicht eines erfindungsgemäßen Trennelements,
Figur 2 die Oberseite eines Trennelements gemäß Figur 1,
Figur 3: die Unterseite eines Trennelements gemäß Figur 1,
Figur 4: eine Seitenansicht des Trennelements gemäß Figur 1 und
Figur 5: ein erstes Verbindungelement.

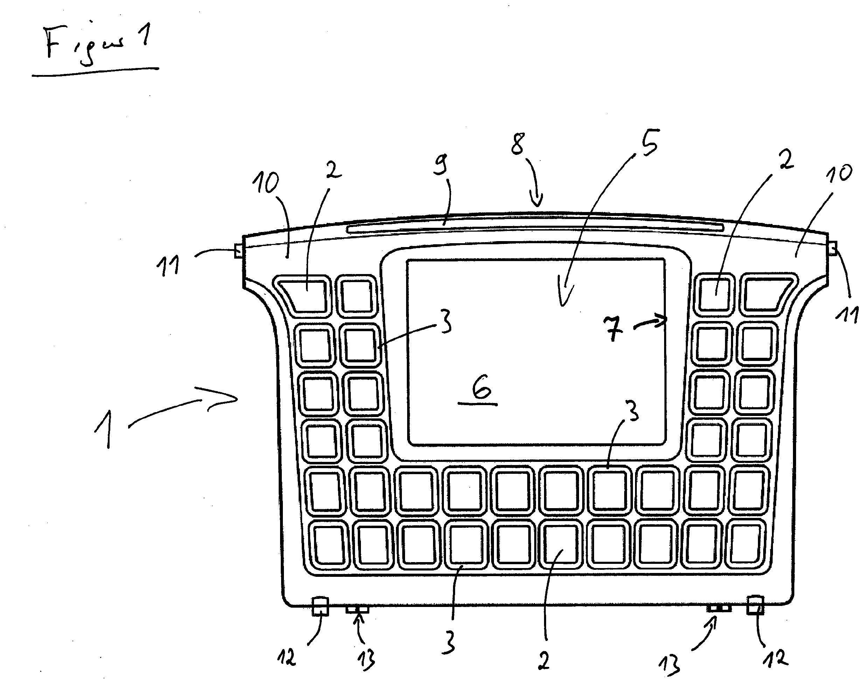

Die in der Figur 1 gezeigte Ansicht des erfindungsgemäßen Trennelements 1 umfasst einen insgesamt flächigen Körper mit einer Vielzahl von Durchbrüchen 2, welche die Sicht auf im hier nicht gezeigten Korb hinter dem Trennelement 1 platzierte Gegenstände ermöglichen. Die Durchbrüche 2 begrenzende wulstförmige Ränder 3 tragen zur Versteifung des in diesem Bereich gitterförmig ausgebildeten Trennelements 1 bei. Im oberen Bereich des Trennelements 1 begrenzt ein ebenfalls wulstförmige Rahmen 4 des Trennelements 1 eine Displayfläche 5, in die ein Einschubelement 6 eingesetzt ist. Das Einschubelement 6 wird in einer im Rahmen 4 angeordneten zweiten Führung 7 gehalten. Das Einschubelement 6 wird über eine an der Oberseite des Trennelements 1 angeordnete schlitzförmige Öffnung 8 eingesetzt, welche in dieser Figur von einem Endstück 9 des Einschubelement 6 abgedeckt ist.

In seitlich vorstehende Fortsätze 10 des Trennelements 1 sind beidseitig erste Verbindungselemente so weit eingesetzt, dass lediglich der erste Abschnitt 11 hervor steht. Die seitlich vorstehenden Fortsätze 10 ermöglichen eine noch flexiblere Anpassung des Trennelements 1 an die Form des hier nicht gezeigten Korbes. Sollte der Korb zu schmal für das Trennelement 1 sein, können die seitlich vorstehenden Fortsätze 10 zur Reduzierung der Breite des Trennelements 1 gekürzt werden.

An der Unterseite des Trennelements 1 stehen 2. Verbindungselemente 12 sowie Zentriermittel 13 vor, die im Folgenden noch näher erläutert werden.

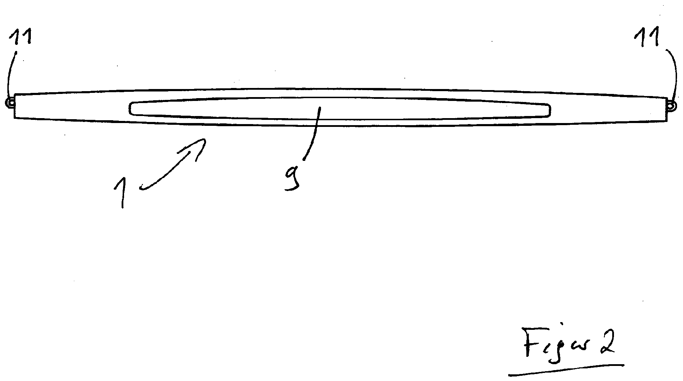

Bei der von der Figur 2 gezeigten Oberseite des Trennelements 1 sind die beidseitig vorstehenden, zumindest im wesentlichen u-förmig ausgebildeten ersten Abschnitte 11 des ersten Verbindungselements sowie das die schlitzförmige Öffnung 8 abdeckende Endstück 9 des Einschubelements 6 dargestellt.

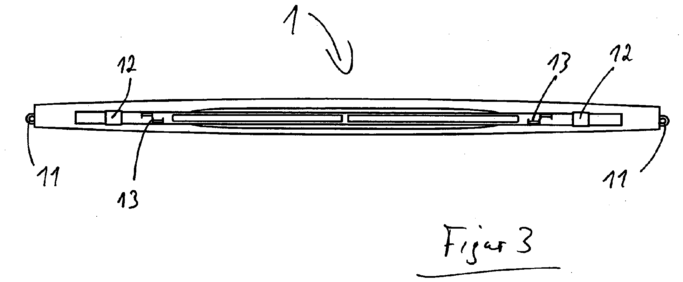

In der Figur 3 sind ebenfalls die beidseitig seitlich hervorstehenden ersten Abschnitte 11 dargestellt. Die an der Unterseite hervorstehenden Zentriermittel 13 weisen einen nach unten hin offenen kreisbogenförmigen Verlauf auf. Vorteilhafterweise der kreisbogenförmige Verlauf größer 180°, so dass die Zentriermittel 13 eine leichte Hinterschneidung für den auf die aufgesetzten Draht ausbilden. Die ebenfalls an der Unterseite des Trennelements 1 vorstehenden zweiten Verbindungselemente 12 werden hier nur schematisch dargestellt.

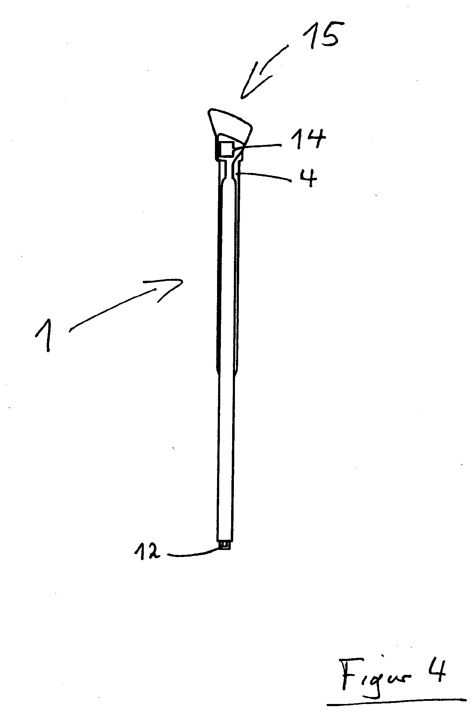

Die Seitenansicht gemäß Figur 4 zeigt neben den bereits beschriebenen Merkmalen die Nase 14 eines zweiten Abschnitts des ersten Verbindungselements, welche das Einsetzen des ersten Verbindungselements am Trennelement 1 definiert. Ebenfalls gezeigt wird eine schräg verlaufende Oberseite 15 des Trennelement 1 sowie der wulstförmige Verlauf des Rahmens 4.

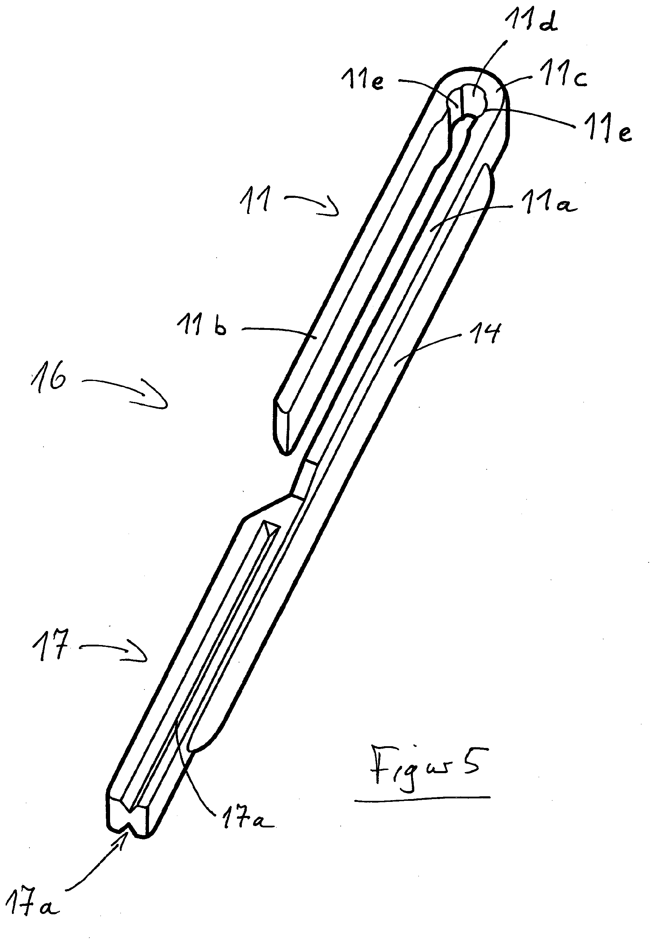

Die in der Figur 5 gezeigte Ausführungsform des ersten Verbindungelements (16) weist den zumindest im wesentlichen u-förmigen ersten Abschnitt (11) und den zweiten Abschnitt (17) auf. Entlang eines Schenkels (11a) des ersten Abschnitts (11) verläuft eine Nase (14), die sich in dem hier gezeigten Beispiel über den Schenkel (11a) bis in den zweiten Abschnitt (17) erstreckt. Zwischen dem ersten Schenkel (11a) und einem zweiten Schenkel (11b) des ersten Abschnitts (11) ist der kreisbogenförmige Verlauf (11c) angeordnet. An dessen Innenseite ist der Bereich mit reduzierter Materialstärke (11d) zu erkennen. Beidseitig weist der Übergang zwischen kreisbogenförmigen Verlauf (11c) und den Schenkeln (11a, 11b) eine Hinterschneidung (11e) für den hier nicht gezeigten eingesetzten Draht auf.

Der zweite Abschnitt (17) umfasst eine Nut (17a) zur Führung eines hier nicht gezeigten Befestigungselements beim Einsetzen. Die Nut (17a) ist im gezeigten Ausführungsbeispiel beidseitig am zweiten Abschnitt (17) ausgebildet. Von Vorteil ist es dabei, dass das hier nicht gezeigte Befestigungselement so angeordnet werden kann, dass es nach dem Einsetzen des Einschubelements (6) in das Trennelement (1) von dessen Endstück (9) überdeckt werden kann und somit im zusammengebauten Zustand des Trennelements (1) nicht mehr sichtbar ist.

## Patentansprüche

1. Trennelement (1), mit dem der Innenraum eines Korbes, insbesondere eines Einkaufwagenkorbes, unterteilbar ist, aufweisend eine Mehrzahl von Verbindungselementen zur Befestigung des Trennelements (1) an den Seiten des Korbes, wobei ein erster Abschnitt (11) eines ersten Verbindungselements (16) zur Befestigung des Trennelements (1) an einer Seite des Korbes zumindest im wesentlichen u-förmig ausgebildet ist, und wobei ein Schenkel (11a, 11b) des zumindest im wesentlichen u-förmigen ersten Abschnitts (11) an einen zweiten Abschnitt (17) des ersten Verbindungselements (16) angrenzt, der in einer im Trennelement (1) ausgebildeten ersten Führung kraftschlüssig und/oder formschlüssig gehalten wird,
**dadurch gekennzeichnet,**
**dass** das Trennelement (1) an seiner Oberseite eine schlitzförmige Öffnung (8) zum Einsetzen eines Informationsträgers aufweist, wobei die schlitzförmige Öffnung (8) eine zweite Führung (7) für einen in die Aussparung einsetzbares Einschubelement (6) umfasst, wobei der Informationsträger zwischen der zweiten Führung (7) und dem Einschubelement (6) formschlüssig gehalten werden kann.

2. Trennelement nach Anspruch 1,
**dadurch gekennzeichnet,**
**dass** beide Schenkel (11a, 11b) des zumindest im wesentlichen u-förmigen ersten Abschnitts (11) in das Trennelement (1) eingreifen, wobei der erste Schenkel (11a) vorzugsweise länger als der zweite Schenkel (11b) ist.

3. Trennelement nach Anspruch 1 oder 2,
**dadurch gekennzeichnet,**
**dass** der zwischen den beiden Schenkel (11a, 11b) liegende Verlauf (11c) des zumindest im wesentlichen u-förmigen ersten Abschnitts (11) einen Bereich (11d) umfasst, welcher eine reduzierte Materialstärke aufweist.

4. Trennelement nach einem der vorherigen Ansprüche,
**dadurch gekennzeichnet,**
**dass** einer der Schenkel (11a, 11b) des zumindest im wesentlichen u-förmigen ersten Abschnitts (11) eine Nase (14) aufweist, welche in eine in Längsrichtung der ersten Führung verlaufende Aussparung eingreift.

5. Trennelement nach einem der vorherigen Ansprüche,
**dadurch gekennzeichnet,**
**dass** ein zweites Verbindungselement (12) an der Unterseite des Trennelements (1) angeordnet ist, wobei das zweite Verbindungselement (12) an der Unterseite vorsteht und eine Aufnahme für einen Draht des Korbes ausbildet, insbesondere eine Hinterschneidung für den Draht ausformt.

6. Trennelement nach einem der vorherigen Ansprüche,
**dadurch gekennzeichnet,**
**dass** an der Unterseite des Trennelements (1) zumindest ein Zentriermittel (13) angeordnet ist, welches das Trennelement (1) beim Einsetzen in den Korb auf einem Draht des Korbes positioniert.

7. Trennelement nach einem der vorherigen Ansprüche,
**dadurch gekennzeichnet,**
**dass** das zweite Verbindungselement (12) lösbar mit dem Trennelement (1) verbunden ist.

8. Trennelement einem der vorherigen Ansprüche,
**dadurch gekennzeichnet,**
**dass** das Einschubelement (6) formschlüssig in der schlitzförmige Öffnung (8) gehalten ist.

9. Trennelement einem der vorherigen Ansprüche,
**dadurch gekennzeichnet,**
**dass** die Oberseite des Trennelements (1) eine Aufnahme für ein Endstück (9) des Einschubelements (6) aufweist, wobei das Endstück (9) und die Aufnahme in Längsrichtung, insbesondere in Längs- und Querrichtung, über die schlitzförmige Öffnung (8) hinaus stehen.

10. Trennelement nach einem der vorherigen Ansprüche,
**dadurch gekennzeichnet,**
**dass** ein Befestigungselement einen Formschluss zwischen dem Trennelement (1) und dem ersten Verbindungselement (16), insbesondere dem zweiten Abschnitt (17) des ersten Verbindungselements (16), herstellt.

11. Trennelement nach Anspruch 10,
**dadurch gekennzeichnet,**
**dass** der zweite Abschnitt (17) des ersten Verbindungselements (16) eine in Längsrichtung des zweiten Abschnitts (17) verlaufende Nut (17a) aufweist.

## Claims

1. Dividing element (1), using which the interior space of a basket, in particular, of a shopping trolley basket, can be subdivided, comprising a plurality of connecting elements for fastening the dividing element (1) on the sides of the basket, wherein a first section (11) of a first connecting element (16) is designed to be at least essentially U-shaped for fastening the dividing element (1) to a side of the basket, and wherein a limb (11a, 11b) of the at least essentially U-shaped first section (11) abuts a second section (17) of the first connecting element (16), which is held in a first guide formed in the dividing element (1) in a positive-locking and/or non-positive-locking manner.
**characterized in that**
the dividing element (1) has a slit-shaped opening (8) for inserting an information carrier on its top side, wherein the slit-shaped opening (8) comprises a second guide (7) for an insertion element (6) that can be inserted into the recess, wherein the information carrier is held between the second guide (7) and the insertion element (6) in a positive-locking manner.

2. Dividing element according to Claim 1,
**characterized in that**
both limbs (11a, 11b) of the at least essentially U-shaped first section (11) engages into the dividing element (1), wherein the first limb (11a) is preferably longer than the second limb (11b).

3. Dividing element according to Claim 1 or 2,
**characterized in that**
the progressive course (11c) of the at least essentially U-shaped first section (11) lying between the two limbs (11a, 11b) comprises a region (11a), which has a reduced material thickness.

4. Dividing element according to one of the preceding claims, **characterized in that**
one of the limbs (11a, 11b) of the at least essentially U-shaped first section (11) has a nib (14) which engages into a recess running in the longitudinal direction of the first guide.

5. Dividing element according to one of the preceding claims, **characterized in that**
a second connecting element (12) is arranged on the underside of the dividing element (1), wherein the second connecting element (12) protrudes on the underside and forms a receptacle for a wire of the basket, in particular, forming an undercut for the wire.

6. Dividing element according to one of the preceding claims, **characterized in that**
at least one centring means (13) is arranged on the underside of the dividing element (1), which positions the dividing element (1) on a wire of the basket when inserting into the basket.

7. Dividing element according to one of the preceding claims, **characterized in that**
the second connecting element (12) is detachably connected to the dividing element (1).

8. Dividing element any one of the preceding claims, **characterized in that**
the insertion element (6) is held in the slit-shaped opening (8) in a positive-locking manner.

9. Dividing element any one of the preceding claims, **characterized in that**
the top side of the dividing element (1) has a receptacle for an end piece (9) of the insertion element (6), wherein the end piece (9) and the receptacle protrude beyond the slit-shaped opening (8) in the longitudinal direction, in particular, in the longitudinal direction and the transverse direction.

10. Dividing element according to one of the preceding claims, **characterized in that**
a fastening element establishes a positive-locking fit between the dividing element (1) and the first connecting element (16), in particular, the second section (17) of the first connecting element (16).

11. Dividing element according to Claim 10,
**characterized in that**
the second section (17) of the first connecting element (16) has a groove (17a) running in the longitudinal direction of the second section (17).

## Revendications

1. Élément de séparation (1), permettant de diviser l'espace intérieur d'un panier, notamment d'un panier de chariot de supermarché, comportant une multiplicité d'éléments d'assemblage, destinés à fixer l'élément de séparation (1) sur les côtés du panier, pour la fixation de l'élément de séparation (1) sur un côté du panier, une première partie (11) d'un premier élément d'assemblage (16) étant conçue au moins sensiblement en forme de U et une branche (11a, 11b) de la première partie (11) au moins sensiblement en forme de U étant adjacente à une deuxième partie (17) du premier élément d'assemblage (16) qui est retenue par complémentarité de force et / ou de forme dans un premier guidage conçu dans l'élément de séparation, **caractérisé en ce que**
l'élément de séparation (1) comporte sur sa face supérieure un orifice (8) en forme de fente, destiné à l'insertion d'un support d'information, l'orifice (8) en forme de fente comprenant un deuxième guidage (7) pour un élément d'insertion (6) insérable dans l'encoche, le support d'information pouvant être retenu par complémentarité de forme entre le deuxième guidage (7) et l'élément d'insertion (6).

2. Élément de séparation selon la revendication 1,
**caractérisé en ce que**
**en ce que** les deux branches (11a, 11b) de la première partie (11) au moins sensiblement en forme de U s'engagent dans l'élément de séparation (1), la première branche (11a) étant de préférence plus longue que la deuxième branche (11b).

3. Élément de séparation selon la revendication 1 ou 2, **caractérisé en ce que**
le trajet (11c) situé entre les deux branches (11a, 11b) de la première partie (11) au moins sensiblement en forme de U comprend une zone (11d) qui comporte une épaisseur de matière réduite.

4. Élément de séparation selon l'une quelconque des revendications précédentes,
**caractérisé en ce que**
l'une des branches (11a, 11b) de la première partie (11) au moins sensiblement en forme de U comporte un bec (14) qui s'engage dans une encoche s'écoulant dans la direction longitudinale du premier guidage.

5. Élément de séparation selon l'une quelconque des revendications précédentes,
**caractérisé**
**en ce qu'**un deuxième élément d'assemblage (12) est placé sur la face inférieure de l'élément de séparation (1), le deuxième élément d'assemblage (12) débordant sur la face inférieure et formant un logement pour un fil métallique du panier, façonnant notamment une contre-dépouille pour le fil métallique.

6. Élément de séparation selon l'une quelconque des revendications précédentes,
**caractérisé en ce que**
sur la face inférieure de l'élément de séparation (1) est placé au moins un moyen de centrage (13), lequel, lors de son insertion dans le panier positionne l'élément de séparation (1) sur un fil métallique du panier.

7. Élément de séparation selon l'une quelconque des revendications précédentes,
**caractérisé en ce que**
le deuxième élément d'assemblage (12) est assemblé de manière amovible avec l'élément de séparation (1).

8. Élément de séparation selon l'une quelconque des revendications précédentes,
**caractérisé en ce que**
l'élément d'insertion (6) est retenu par complémentarité de forme dans l'orifice (8) en forme de fente.

9. Élément de séparation selon l'une quelconque des revendications précédentes,
**caractérisé en ce que**
la face supérieure de l'élément de séparation (1) comprend un logement pour une pièce d'extrémité (9) de l'élément d'insertion (6), la pièce d'extrémité (9) et le logement débordant dans la direction longitudinale, notamment dans la direction longitudinale et transversale au-delà de l'orifice (8) en forme de fente.

10. Élément de séparation selon l'une quelconque des revendications précédentes,
**caractérisé**
**en ce qu'**un élément de fixation établit une complémentarité de forme entre l'élément de séparation (1) et le premier élément d'assemblage (16), notamment la deuxième partie (17) du premier élément d'assemblage (16).

11. Élément de séparation selon la revendication 10, **caractérisé en ce que**
la deuxième partie (17) du premier élément d'assemblage (16) comporte une rainure (17a) s'écoulant dans la direction longitudinale de la deuxième partie (17).
